# EUROPEAN PATENT SPECIFICATION

(11) **EP 2 634 116 B1**
(45) Date of publication and mention of the grant of the patent: **21.06.2017**
(21) Application number: 12001399.0
(22) Date of filing: 01.03.2012
(51) Int. Cl.: B65G 21/06, B65G 21/00

(54) **Multi-connector for extendable conveyor**
Multiverbinder für erweiterbare Förderanlage
Connecteur multiple pour convoyeur extensible

(43) Date of publication of application: 04.09.2013
(73) Proprietor: Caljan Rite-Hite ApS, 8361 Hasselager (DK)
(72) Inventor: Baek, Anders Stougaard, 8000 Aarhus C (DK); Falk, Allan, 8700 Horsens (DK); Oestergaard, Mads, 8260 Viby J (DK); Nielsen, Brian Bondegaard, 8700 Horsens (DK)
(74) Representative: Samson & Partner Patentanwälte mbB

(56) References cited:
- EP-A2- 2 003 076
- DE-A1-102010 033 115
- DE-U1- 20 202 926
- US-A- 4 281 955

## Description

### FIELD OF THE INVENTION

The present invention relates generally to an extendable conveyor for conveying articles including a multi-connector system.

### BACKGROUND OF THE INVENTION

The loading and unloading of packages from truck trailers or the like is typically a physically challenging task for which typically extendable conveyors are used.

Extendable conveyors according to the preamble of claim 1 are for example known from WO 2006/068443 A1 and DE 10 2010 005 267 A1 and have a base unit and multiple extendable conveyor sections which are nested within each other. The total length of the extendable conveyor can be adjusted by extending or retracting the nested extendable conveyor sections. The end of the extendable conveyor, i.e. the outmost extendable conveyor section, can move, for example, into a truck at a loading dock for loading or unloading goods. Such known extendable conveyors have a front light at the front of the outmost extendable conveyor section to illuminate the front area of the outmost conveyor section.

It is anticipated that the volume of loose-loaded goods being transported will continue to increase. Additionally, it is anticipated that attracting people to work in the (un)loading zone will become more difficult as smaller generations enter the labor market. Moreover, (un)loading zones are typically cramped and the environment in the zones is uncomfortable. Thus, there is a need to make the (un)loading zone or working area comfortable and to thereby make it attractive for personnel. Furthermore, the (un)loading zone is a hazardous area and there is a risk that personnel gets hurt.

From DE 202 02 926 U1 an extendable conveyor is known. A robot for loading and unloading can be mechanically coupled to the conveyor.

From US 4,281,955 A a conveyor is known, where an electrical connection is provided on the conveyor head for connecting a tape switch.

It is an object of the present invention to provide an extendable conveyor which is able to improve the working area surrounding the extendable conveyor with respect to comfort and security aspects.

### SUMMARY OF THE INVENTION

According to a first aspect the invention provides an extendable conveyor in accordance with independent claim 1.

Further aspects of the invention are set forth in the dependent claims, the following description of preferred embodiments and the drawings illustrating preferred embodiments.

### BRIEF DESCRIPTION OF THE DRAWINGS

Embodiments of the present invention are explained by way of example with respect to the accompanying drawings, in which:
Fig. 1 illustrates an embodiment of a multi-connector at an outmost mechanically extendable section of an extendable conveyor in accordance with the present invention;
Fig. 2 illustrates an embodiment of a multi-connector at an outmost mechanically extendable section of an extendable conveyor in accordance with the present invention, the multi-connector having an electric socket in its middle area;
Fig. 3 illustrates an embodiment of a multi-connector at an outmost section of an extendable conveyor in accordance with the present invention, the multi-connector having an electric and vacuum supply socket in its middle area;
Fig. 4 illustrates an embodiment of the multi-connector of Fig. 1 for connecting a light to an outmost mechanically extendable section of an extendable conveyor in accordance with the present invention;
Fig. 5 illustrates the multi-connector with the light of Fig. 4 in a different view;
Fig. 6 is an explosion view of the light shown in Figs. 4 and 5, illustrating a component connector for being connected to the multi-connector of Fig. 1;
Fig. 7 illustrates a fan connected to the multi-connector shown in Figs. 1;
Fig. 8 illustrates the fan of Fig. 7 in more detail and a component connector for being connected to the multi-connector of Fig. 1;
Fig. 9 illustrates the fan of Figs. 7 and 8 from a back view for showing the hinge connection between the fan and a fan holder;
Fig. 10 illustrates an embodiment where the light of Figs. 4 to 6 and the fan of Figs. 7 to 9 are both connected via a common component holder to the multi-connector of Figs. 1; and
Fig. 11 illustrates an embodiment where a vacuum lifting system is connected to the multi-connectors as illustrated in Fig. 1.

### DETAILED DESCRIPTION OF PREFERRED EMBODIMENTS

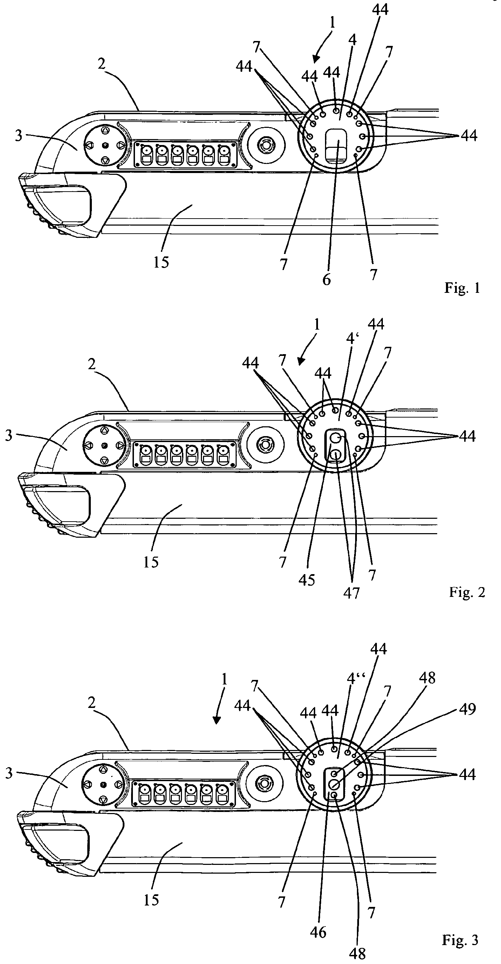

Fig. 1 illustrates an embodiment of a multi-connector 4 of an extendable conveyor 1 in accordance with the present invention. Before presenting a detailed description of the preferred embodiments, some general explanations are made.

As discussed in the outset extendable conveyors, such as also known from WO 2006/068443 A1 and DE 10 2010 005 267 A1 have a base unit and multiple extendable conveyor sections which are nested within each other. The total length of the extendable conveyor can be adjusted by extending or retracting the nested extendable conveyor sections. The end of the extendable conveyor, i.e. the outmost extendable conveyor section, can move, for example, into a truck at a loading dock for loading or unloading goods.

As mentioned, due to the uncomfortable environment typically surrounding the working area of an extendable conveyor, it might be difficult in future to attract people to work in the (un)loading zone at the extendable conveyor. Moreover, (un)loading zones are typically cramped and hazardous and, thus, the risk that personnel gets hurt is high.

The inventors have recognized that comfort for personnel working in the working area surrounding an extendable conveyor can be improved when, in particular, at the front end of an extendable conveyor external components, such as a light, fan, lifting system or the like, can be mounted to assist personnel in the (un)loading zone doing their work and when such external components can be easily connected and disconnected to the extendable conveyor via a multi-connector.

With such a multi-connector, in some embodiments, there is no need to provide an extra mechanical and/or electrical and/or vacuum connection for an external component to the extendable conveyor.

A multi-connector is configured for connecting at least one external component, such as a light, fan, lifting system or the like, to an extendable conveyor.

The extendable conveyor is configured for conveying articles and comprises a base unit, at least one mechanically extendable section, which is adjustably positionable between a retracted position fully or partially nested within the base unit and an extended position fully or partially telescoped forwardly from the base unit, and a conveying surface for conveying articles.

In some embodiments, the base unit is configured to be moveable in the direction of the mechanically extendable sections and/or transversely to this direction.

The conveying surface extends at least partially on an upper side of the at least one mechanically extendable section. In some embodiments the conveying surface also extends on the base unit. As known to the skilled person, the conveying surface can be formed by a belt or rollers.

In some embodiments, the extendable conveyor comprises two or more mechanically extendable sections, which are nested within each other and are disposed in a telescopic manner such that they are adjustably positionable between a retracted position fully or partially nested within the base unit and an extended position fully or partially telescoped forwardly from the base unit. The last mechanically extendable section at the end opposite to the base unit is also referred to as the outmost mechanically extendable section in the following (or briefly "outmost section"). The mechanically extendable sections between the base unit and the outmost mechanically extendable section are also referred to as intermediate mechanically extendable sections in the following (or briefly "intermediate section"). In embodiments where the extendable conveyor only comprises one mechanically extendable section, the "intermediate" and the "outmost" mechanically extendable section are the same. In some embodiments, a so-called droop snoot, which is an extra conveyor section, is located at the outmost section. In some embodiments, the multi-connector and the multi-connector system, respectively, can also be located at the droop snoot.

For example, the mechanically extendable sections can be moved via a motor drive located in the base unit or any other mechanically extendable section and, e.g. drive chains, wire ropes, (timing) belts, or the like, interconnecting the sections with each other such that the all mechanically extendable sections can be perform a telescopic movement by driving the motor drive accordingly. The telescopic movement mechanism of an extendable conveyor is generally known to the skilled person.

The multi-connector comprises a standardized mechanical connection section which is adapted for mechanically attaching the at least one external component, a fastening section for fastening the multi-connector to the extendable conveyor, and a standardized functional connection section which is adapted for providing at least one of an electric and vacuum supply for the at least one external component.

The standardized mechanical connection section comprises, for example, two or more fastening points at which the external component can be mechanically fixed to the multi-connector. The fastening points are, for example, holes through which a screw connection to the external component can be made, or pins, clamps, or any other mechanical fastening structure which is known to the skilled person and which is able to carry the weight of the external component. In some embodiments also a mixture of, for example, holes and pins, is used.

In some embodiments, the standardized mechanical connection section has standardized dimensions and/or a standardized shape and/or a standardized distance between fastening points and/or standardized dimensions of the fastening points.

In some embodiments, the standardized functional connection section has an opening, through hole or any other structure known to the skilled person, through which an electric and/or vacuum supply connection can extend. In some embodiments, the standardized functional connection section comprises an electric plug/socket and/or a vacuum plug/socket or any other structure which is adapted for electric and/or vacuum supply of an external component. In some embodiments, the standardized functional connection section of the multi-connector includes a standardized electric connector. Such a standardized electric connector is, for example, a standardized electric socket or plug, which can meet, e.g. a respective electric connection standard of a specific country.

In some embodiments, the extendable conveyor provides the electric and/or vacuum supply. For example, in some embodiments, an electric and/or vacuum connection line extends from the extendable conveyor to the multi-connector and to and/or through the functional connection section to the external component in order to provide electricity and/or a vacuum supply to the external component.

The standardized mechanical section is adapted to counteract a gravitational force exerted by the attached at least one external component. The external component has a weight which has to be carried by the multi-connector. As mentioned, the multi-connector can be fastened with the fastening section to the extendable conveyor, e.g. to a support bar or any other structure of the extendable conveyor which is sufficient strong to carry the multi-connector and the external components attached to the multi-connector. Thus, in some embodiments, the mechanical section of the multi-connector directs the gravitational force exerted by the external component via the fastening section to the external conveyor to which the multi-connector is connected to. The standardized mechanical section is adapted to counteract a rotational force exerted by the attached at least one external component. In some embodiments, the mechanical section has two fastening points which are opposite to each other in order to ensure that the attached external component can not rotate around an axis.

In some embodiments, the fastening section of the multi-connector comprises two lugs which are opposite to each other. The lugs are adapted for fastening the multi-connector to the extendable conveyor, e.g. via a side part which in turn is mounted to a support bar of the extendable conveyor. In some embodiments, there is an opening between the two lugs through which an electric and/or vacuum supply can extend. This opening can be in communication with the functional connection section.

In some embodiments, the multi-connector is adapted for connecting the at least one external component comprising at least one of: light, fan, and vacuum lifting system, as will be explained in more detail below.

In some embodiments the component holder is a support bar or similar, which is connected on one side to the component connector and on the opposite side to the respective component. The component connector can also be an integral part of the component holder, while in other embodiments, the component connector and the component holder can be separate parts which can be attached to each other, e.g. via screw joint, welding or the like.

The at least one component connector includes a standardized mechanical connection section which is adapted for being connected to the standardized mechanical connection section of the multi-connector. The at least one component connector can also include a standardized functional connection section which is adapted for being connected to the standardized functional connection section of the multi-connector.

In some embodiments, the at least one component connector has at least one protrusion, such as a pin, engaging into the standardized mechanical connection section of the multi-connector, thereby counteracting a rotational force exerted by the component connection. The standardized mechanical connection section of the multi-connector has, for example, for each protrusion a corresponding hole or blind hole is provided into which the protrusion (pin) can engage.

In some embodiments, the at least one component connector is mechanically fixed to the multi-connector by a screw joint. Also a mixture of screw joint and the protrusion embodiment described above is used.

As mentioned above, the external component comprises at least one of: light, fan, vacuum lifting system.

By providing a light the surrounding working area of the extendable conveyor is illuminated, since, for example, light rays origin from the light are reflected by the ground, side walls or ceiling in the neighborhood of the lighting. In embodiments, where the light is connected to a multi-connector at the outmost end of the extendable conveyor, the light can also illuminate, e.g. a truck container into which the outmost end of the conveyor extends. Thus, personnel loading or unloading articles on or from the conveying surfaces feel comfortable, since they work in a well illuminated (un)loading zone. Also, personnel can better read labels on articles to be (un)loaded. Moreover, the risk for getting hurt is decreased, since personnel can easier see obstacles or sharp edges, etc., due to the sufficient illumination of the working area in which they are working.

In some embodiments, the light comprises a light-emitting diode lamp. Light-emitting diode (LED) lamps have a good efficiency and high luminescence and, thus, power consumption of the lighting is low in comparison with conventional lamps, such as fluorescent lamps.

The light can also include a light reflector which is such configured that light rays originating from the light are emitted upwardly and/or downwardly, but not, e.g. in a forward/backward direction such that personnel is not blinded.

In some embodiments, the light comprises a lens cover or protection glass. The protection glass can protect a lighting lamp behind the cover and, thus, in some embodiments it is made of a material capable to compensate for crushes and other mechanical impacts on it. Moreover, in some embodiments, the lens cover is shaped to stray light rays originating from the lamp covered by the lens cover when the light rays go through the lens cover. In some embodiments, the lens cover diffuses light rays going through it in order to equally distribute the light rays in the area to be illuminated. In some embodiments, the lens cover also comprises a light filter, e.g. influencing the color temperature.

In some embodiments, the light can pivot around a horizontal and/or vertical axis, such that personnel can adjust the direction of light rays originating from the light.

In some embodiments, the fan is a cross flow fan. Such a fan has suction inlet, e.g. on top or on bottom, and blows out air laterally to the suction direction. The fan can be such positioned, e.g. at the component holder, that air is blown in a direction to a personnel working next to the fan. In some embodiments, the fan comprises a heater and/or cooler for heating/cooling air which is directed to personnel next to the fan.

In some embodiments, as also mentioned above, the at least one multi-connector is mounted at the outmost mechanically extendable section, as also discussed above. For example, the multi-connector is fixed to a support bar of the outmost mechanically extendable section.

The outmost mechanically extendable section can comprise at least one side part which is configured to receive the multi-connector. The side part is mounted in some embodiments on the left and right side at the end portion of the outmost section. For receiving the multi-connector the side part can include an opening which is adapted in its shape and size to the multi-connector. In some embodiments, the multi-connector is securely fixed to the side part.

By providing the multi-connector in a front end region of the outmost section of the extendable conveyer, the working area where personnel are typically (un)loading articles, can be made more comfortable by connected needed external components to the multi-connector. The personnel can just connect the external component which is currently needed.

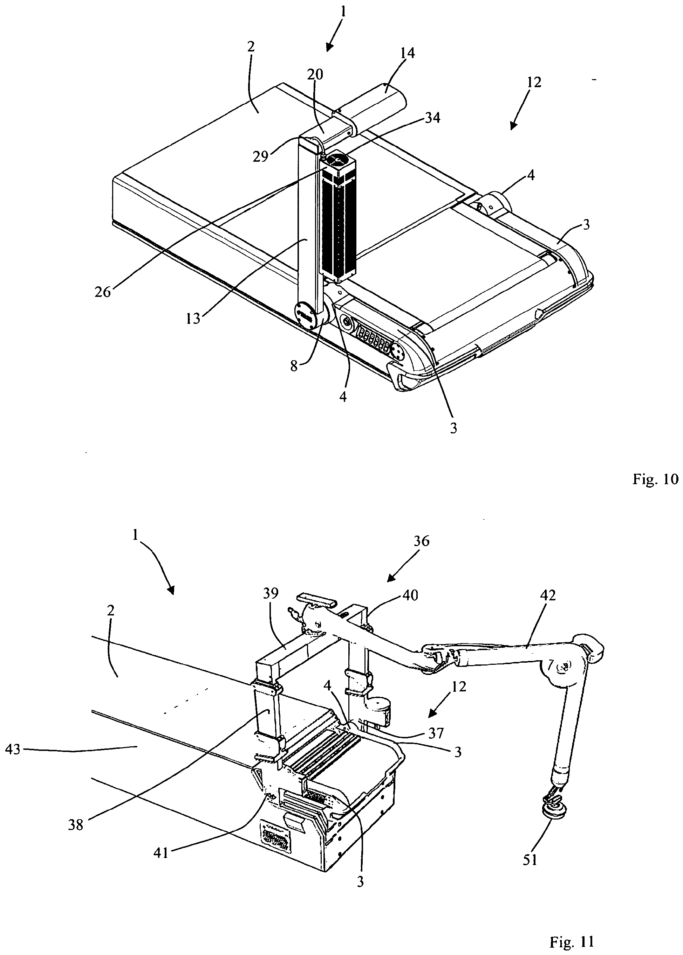

Returning to Fig. 1, there is illustrated an embodiment of a multi-connector 4 mounted at an extendable conveyor 1 in accordance with the present invention. The extendable conveyor 1 has a base unit 43 (see Fig. 11), multiple intermediate mechanically extendable sections and an outmost section 15, which are mechanically extendable and which are nested within each other, as also explained above. In Fig. 1 the extendable conveyor 1 is shown in an extended position (except for Fig. 11 where it is shown in a fully nested position). The mechanically extendable sections are cantileverly supported by the next inwardly or rearwardly positioned extendable section and the base unit 43 and are nested within one another, such that the sections be retracted into the base unit 43 to a stored position which minimizes interference with the floor space of a loading dock when the conveyor is not in use

A conveying surface in the form of a belt 2 extends over all mechanically extendable sections. The belt 12 is driven by a belt drive located in the base unit 43, as generally known to the skilled person.

The multi-connector 4 has a standardized mechanical section which has four threaded holes 7 and nine pin holes 44 which are distributed in a circular manner around a functional connection section 6 which is formed as an opening in a middle area of the multi-connector 4.

The four threaded holes 7 are positioned on the four edges of a square. The edges of the square are on the same circle as the nine pin holes 44.

The threaded holes 7 are used for a screw joint for fastening a component connector, as explained in more detail below.

In the nine pin holes 44 respective component connector pins can engage in order to prevent a pivot moment of a component connector with respect to the multi-connector 4.

The multi-connector 4 has circular cylindrical shape with the longitudinal axis extending transversally to the longitudinal extension direction of the outmost section.

The functional connection section 6 can be adapted for an electric and/or vacuum supply as also explained above. In the present embodiment of multi-connector 4, an electric and/or vacuum supply line can be placed from within the extendable conveyor 1 through the functional connection 6, in order to supply a component connected to the multi-connector 4 with electric current or a vacuum (underpressure).

The threaded holes 7 and the pin holes 44 have standardized dimensions and are distributed in a standardized pattern on the front face of the multi-connector 4. Thus, the threaded holes 7 and the pin holes 44 are placed with predefined distances and on predefined places on the front face of the multi-connector 4, thereby providing a standardized mechanical connection section.

The multi-connector 4 is made of metal in the present embodiment, but in other embodiments it can also be made of plastic or another stiff material having mechanical properties which are useful for connecting external components, as discussed above and described in more detail below.

Fig. 2 illustrates another embodiment of a multi-connector 4', where a standardized electric socket 45, having two electric contact holes 47, is placed within the functional connection section 6. The electric socket 45, i.e. the two electric contact holes 47, is coupled to respective electric lines within the extendable conveyor 1. A component connector for connecting a component, such as already explained above, can have a respective plug with two pins engaging into the contact holes 47, when connecting the component connector to the multi-connector 4'.

Fig. 3 illustrates another embodiment of a multi-connector 4", where a standardized electric and vacuum supply socket 46, having two electric contact holes 48 and a vacuum connection opening 49, is placed within the functional connection section 6 of the multi-connector 4". The electric socket 46, i.e. the two electric contact holes 48, is coupled to respective electric lines within the extendable conveyor 1. The vacuum connection opening 49 is connected to a vacuum supply line within the extendable conveyor 1. A component connector for connecting a component, such as already explained above, can have a respective plug with two pins engaging into the contact holes 48 and a vacuum connector connecting to the vacuum connection opening 49, when connecting the component connector to the multi-connector 4".

The multi-connector 4' and 4" each have the same threaded holes 7 and pin holes 44 as multi-connector 4 explained above, such that the explanations made for multi-connector 4 of Fig. 1 also apply to the multi-connectors 4' and 4".

The multi-connectors 4, 4' and 4" are each located within a side part 3 of the outmost section 15. The side part 3 also comprises control buttons, etc. for controlling the extendable conveyor 1 and components which are connected to the multi-connector 4, 4' or 4". In these embodiments the external casing of the side part 3 has a receptacle that is complemental in shape to the multi-connector, i.e. the cylindrical multi-connector is received within a cylindrical housing.

On each side of the outmost section 15, one side part 3 with a multi-connector 4 is located such that components can be connected to the left and the right side of the outmost section 15 of the extendable conveyor 1.

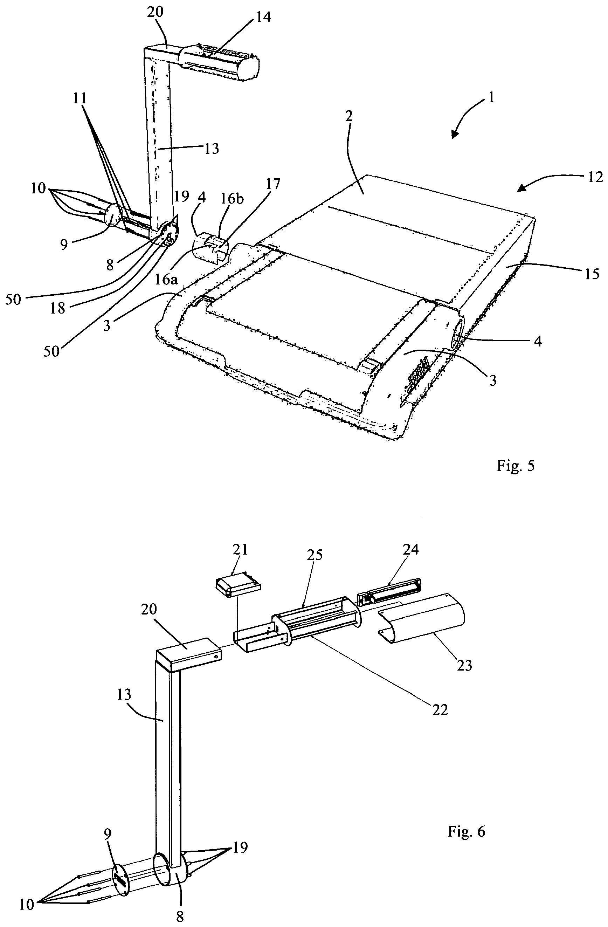

The multi-connector 4 (see Fig. 5) has two connection lugs 16a and 16b which are opposite to each other and which are opposite to the front face where the threaded holes 7 and pin holes 44 are located. The lugs 16a and 16b each have the shape of a half circular cylinder. An opening 17 between the lugs 16a and 16b allows the placement of an electric and or vacuum line through the functional connection section 6 or the placement of an electric socket 45 or electric and vacuum supply socket 46, as explained above. Thus, the opening between the opposite lugs 16a and 16b provide a space for the line connection of an electric and or vacuum line from the inner of the extendable conveyor.

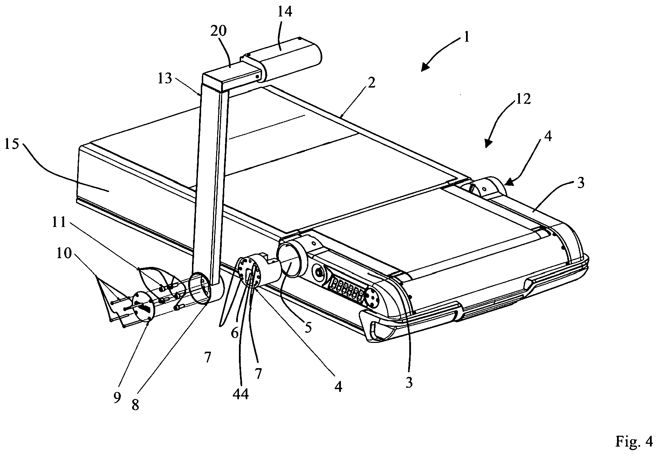

The multi-connector 4 is welded with the outer surface of each lug 16a and 16b to an inner surface of an opening 5 (Fig. 4) in each side part 3. Thereby, a mechanical resilient connection between the multi-connector 4 and the side part 3 is provided. In other embodiments, the multi-connector 4 is welded or otherwise mounted to a support bar within the extendable conveyor 1.

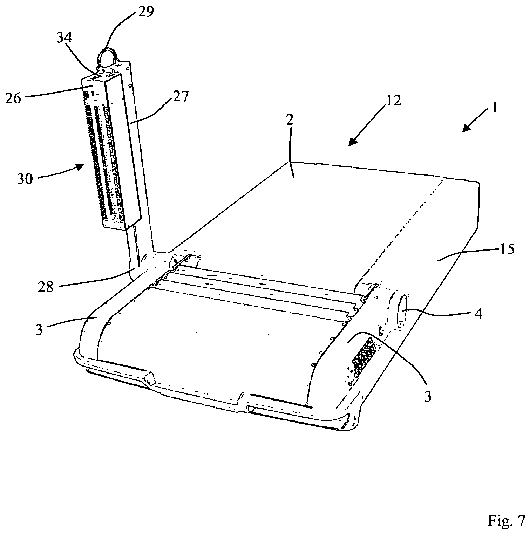

In the following, embodiments are described where different external components are connected to the multi-connector 4, namely a light 14, as shown in Figs. 4 to 6, a fan 26, as shown in Figs. 7 to 9, a combination of both, as shown in Fig. 10, and a vacuum lifting systemvacuum lifting system 36, as shown in Fig. 11.

As shown in Figs. 4 to 6, an external component, such as a light 14, can be connected via a component connector 8 to the multi-connector 4 as illustrated in Fig. 1

The light 14 is mounted to an L-shaped component holder 13. The component connector 8 is placed on the lower and free end of the long part of the L-shaped component holder. The component connector 4 has five pins 19 which engage into the pin holes 44 of the multi-connector 4, when being connected to the multi-connector 4. The component connector 8 is fastened by four screws 11 which extend through respective four holes 50 in the component connector 8 and which are screwed into the threaded holes 7 of the multi-connector 4, thereby providing a force closure between component connector 8 and multi-connector 4.

The component connector 8 is flange-like configured and has a circular cylindrical shape which is adapted to the shape of the multi-connector 4. Moreover, the dimensions and distances of the pins 19 are adapted to the pin holes 44 of the multi-connector 4. Similarly, the holes 50 through which the screws 11 are guided and screwed into the threaded holes 7 of the multi-connector 4 are adapted in their dimensions and distances to the threaded holes 7 of the multi-connector 4.

As the pins 19 of the component connector 8 are inserted into the pin holes 44 of the multi-connector 4, a rotation of the component connector 8 with respect to the multi-connector 4 is prevented. By screwing the screws 11 through the holes 50 of the component connector 8 into the multi-connector 4 a force closure between the component connector 8 and the multi-connector 4 is provided.

In order to protect the screws 11 and to close the inner space of the component connector 8, a cover 9 is mounted with four screws 10 to the component connector 8.

At the free end of the short part 20 of the component holder 13 the light 14 is attached. The light 14, as can be can taken in more detail from the explosion view of Fig. 6, includes a couple of parts: an aluminum reflector 25, a LED lamp module 24, such as a Phillips Fortimo LLM with a power consumption of 12 W and 1100 lumen, a LED driver 21, a LED protection glass 23 and a blinding-protector 22.

The LED lamp 24 is housed within the reflector 25 and the blinding protector 22 and it is protected by the protection glass 23. The blinding protector 22 prevents that light rays stemming from the LED lamp 24 travel directly in a forward direction, such that personnel working in front of light 14 is not blinded. Similarly, reflector 25 prevents that light rays originating from the LED lamp 24 travel directly in a backward direction. The LED protection glass 23 diffuses light rays from the LED lamp 24 in order to equally illuminate the area around the light 14, and in particular above and below light 14. Thus, the light rays from the LED lamp 24 basically travel upwardly and downwardly such that personnel (un)loading articles has a well illuminated working area and can, for example, easily read labels on articles due to the good illumination.

The LED driver 21 drives the LED lamp 24. The light 14 can be switched on/off with a switch located at the side part 3.

In the present embodiment, the light 14 is connected the multi-connector 4 on the right side (left side in Fig. 5) of the outmost section 15 in an front end region 12 of the outmost section. In other embodiments, the light 14 can also be connected to the multi-connector 4 on the left side of the outmost section 15.

The electrical connection between light 14 and the multi-connector 4 can be provided by an electric line through the functional connection section 6 of the multi-connector 4 and through a connection hole 18 in the middle area of component connector 8. The electric line runs within the component holder 13 and is connected to the LED driver 21.

In another embodiment, a fan 26 is connected to multi-connector 4, as illustrated in Figs. 7 to 9. Fan 26 is a block-shaped cross flow fan which has an intake 34 on the upper side and an outlet 30 on a front side. The fan 26 is hinged to a component holder 27 with two hinges 35a and 35b such that fan 26 can pivot around a vertical axis which is parallel to the longitudinal axis of the component holder 27.

The component holder 27 has a longitudinal shape and on its lower end a component connector 28 is located, which is basically identical with component connector 8 for the light 14 explained above.

The component connector 28 has five pins 32 for engaging into respective pin holes 44 of multi-connector 4 and four through holes 33 through which screws are put and screwed into threaded holes 7 of the multi-connector 4 for providing a force closure between component connector 28 and multi-connector 4, as discussed above for light 14.

The electric supply for fan 26 is guided through an opening 31 in a middle area of component connector 28 which is provided by an electric line through the functional connection section 6 of multi-connector 4. This electric line runs through component holder 27 end runs as cable 29 from an upper end of component holder 27 to the upper face of fan 26.

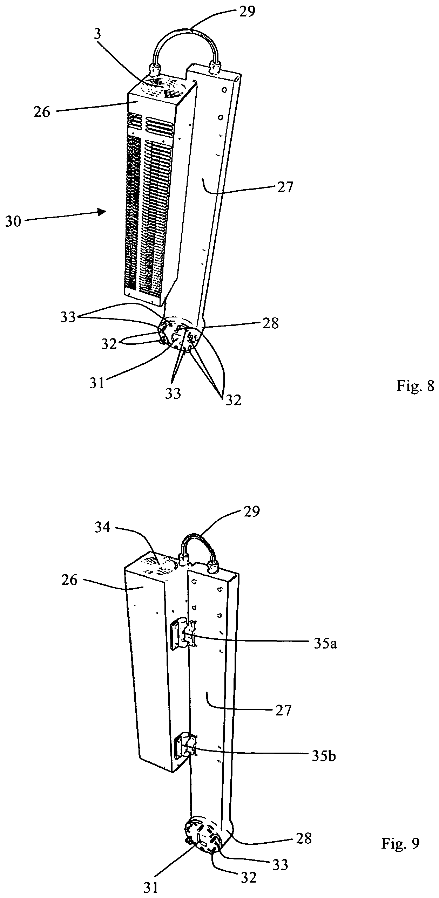

The fan 26 can be pivoted from an operating position, as illustrated in Fig. 9, into a storing position, as illustrated in Fig. 8. In the operating position, the fan 26 is in front of the component holder 27 such that air blown out through outlet 30 is directed to a personnel working next to the front end region 12 of the outmost section 15. In the storing position the fan 26 is hidden behind the component holder 27 such that personnel (un)loading articles in the front end region 12 of the outmost section are not hindered by the fan 26 during their work.

A mesh in the outlet 30 of the fan 26 hinders personnel to get their fingers into the fan 26 and thereby prevents accidents. Moreover, the mesh in outlet 30 has a pattern which helps to equally distribute the air blown out by fan 26. As discussed above, in some embodiments, additionally a heater and/or a cooler is provided such that air blown out by fan 26 can be heated and/or cooled. Also the fan 26 can be controlled by a respective control switch located in the side part 3.

In some embodiments, as illustrated in Fig. 10, a light and a fan 26 can be located on the same component holder 13. The light 14 and fan 26 correspond to the light 14 and fan 26 as discussed above. Moreover, the component holder 13 corresponds to component holder 13 of light 14, as discussed above. In the present embodiment, the fan 26 is hinged to component holder 13, as explained above. Moreover, the electric connection cable 29 for electric supply of fan 26 is guided from an upper side of the longitudinal part of component holder 13 and part 20 to the fan 26.

Component holder 13 has the component connector 8, which has already been explained in detail above. Both the light 14 and the fan 26 are electrically supplied via the multi-connector 4 as explained above.

Also other components, such as a vacuum lifting system 36 vacuum lifting systemcan be connected to the multi-connector 4. The vacuum lifting system 36 has a support structure which has two vertical support arms, a right support arm 38 and a left support arm 40 which are connected via a crossbar 39 to each other. In a middle region of the crossbar 39 a lifting arm 42 is pivotally mounted which has a pickup tube 51 at its lower end. At the end of pickup tube 51 articles can be picked up via the vacuum supplied to the end of the pickup tube 51.

Each one of the left and right vertical support arms 38 and 40 has a component connector 37 on its lower end at which each one of the left and right vertical support arms 38 and 40 are connected to one multi-connector 4 residing within a left and right side part 3 at the outmost section of extendable conveyor 1.

The component connector 37 corresponds to component connectors 8 and 28 explained above for the light 14 and the fan 26 and is covered by a cover 41. In contrast to the component connectors 8 and 28, in the present embodiment a vacuum supply is placed through the multi-connector 4 and through the component connector 8 in order to supply the pickup tube 51 with vacuum.

Also other external components can be connected to the multi-connector 4, such as a heater or cooler, electric tools, speakers, etc.

Of course, the light, fan and lifting system explained above can also be connected to above explained multi-connector 4' and 4", respectively.

## Claims

1. An extendable conveyor for conveying articles, comprising
a base unit (43),
at least one mechanically extendable section (15) supported in a cantilevered manner and selectively positionable relative to the base unit (43), and
a conveying surface (2) for conveying articles extending at least partially on an upper side of the at least one mechanically extendable section (15), wherein one (15) of the at least one mechanically extendable section is an outmost mechanically extendable section (15) **characterized in that** the extendable conveyer (1) comprises at least
one multi-connector system, the at least one multi-connector system comprising at least one multi-connector (4), the multi-connector (4) comprises:
a standardized mechanical connection section (7) for mechanically attaching an external component,
a fastening section (16a, 16b) fastened to the extendable conveyor (1), and
a standardized functional connection section (6) providing at least one of an electric and vacuum supply for the external component, wherein the
standardized mechanical connection section (7) is adapted to counteract at least one of a gravitational force exerted by the attached at least one external component and a rotational force exerted by the attached at least one external component; and
a plurality of external components, each external component (14, 26, 36) comprising:
a component holder (13, 27, 38, 40) holding at least one component (14, 26, 36), and
at least one component connector (8, 28, 37) adapted to be connected to the at least one multi-connector (4), wherein the component holder (13, 27, 38, 40) includes the at least one component connector (8, 28, 37), wherein the at least one component connector (8, 28, 37) includes a standardized mechanical connection section (19) adapted for being connected to the standardized mechanical connection section (7) of the multi-connector (4) and wherein
the at least one component connector (8, 28, 37) includes a standardized functional connection section (18) adapted for being connected to the standardized functional connection section (6) of the multi-connector (4),
wherein said component (14, 26, 36) is one of: light (14), fan (26), vacuum lifting system (36), heater, cooler, electric tools, speakers,
and wherein at least one of the plurality of external components has a component (14. 26, 36) different than the component(s) of the other(s) external component(s).

2. The extendable conveyor of claim 1, wherein the fastening section (16a, 16b) comprises two lugs (16a, 16b) being opposite to each other, wherein the lugs (16a, 16b) are adapted for fastening the multi-connector (4) to the extendable conveyor (1).

3. The extendable conveyor of anyone of the preceding claims, wherein the standardized functional connection section (6) includes a standardized electric connector.

4. The extendable conveyor of anyone of the preceding claims, wherein the at least one component connector (8, 28, 37) has at least one protrusion (32) engaging into the standardized mechanical connection section (7) of the multi-connector (4), thereby counteracting a rotational force exerted by the component connection (8, 28, 37).

5. The extendable conveyor of anyone of the preceding claims, wherein the at least one component connector (8, 28, 37) is mechanically fixed to the multi-connector (4) by a screw joint.

6. The extendable conveyor of anyone of the preceding claims, wherein said component (14, 26, 36) is one of: light (14), fan (26), vacuum lifting system (36).

7. The extendable conveyor of claim 6, wherein the light (14) comprises a light-emitting diode lamp (24).

8. The extendable conveyor of anyone of claims 6 and 7, wherein the light (14) includes a light reflector (25) being such configured that light rays originating from the light (14) are emitted upwardly and/or downwardly.

9. The extendable conveyor of claim 6, wherein the fan (26) is a cross flow fan.

10. The extendable conveyor of claim 6 or 9, wherein the fan (26) comprises at least one of a heater and a cooler for heating and cooling air.

11. The extendable conveyor of anyone of the preceding claims, wherein the outmost mechanically extendable section (15) comprises at least one side part (3) being configured for receiving the multi-connector (4).

12. The extendable conveyor of anyone of the preceding claims, wherein the at least one multi-connector (4) is fixed to a support bar of the outmost mechanically extendable section (15).

13. The extendable conveyor of anyone of the preceding claims, wherein the standardized functional connection section (6) of the at least one multi-connector (4) is connected to an electric supply and/or vacuum supply of the extendable conveyor (1).

## Patentansprüche

1. Erweiterbare Förderanlage zum Befördern von Gegenständen umfassend eine Grundeinheit (43),
wenigstens einen mechanisch verlängerbaren, auf eine freitragende Weise gehaltenen und selektiv relativ zu der Grundeinheit (43) positionierbaren Abschnitt (15) und
eine sich wenigstens teilweise an einer Oberseite des wenigstens einen mechanisch verlängerbaren Abschnitts (15) erstreckende Förderfläche (2), wobei einer (15) des wenigstens einen mechanisch verlängerbaren Abschnitts ein äußerster mechanisch verlängerbarer Abschnitt (15) ist,
**dadurch gekennzeichnet, dass** die erweiterbare Förderanlage (1) wenigstens ein Mehrfach-Verbindersystem umfasst, wobei das wenigstens eine Mehrfach-Verbindersystem wenigstens einen Mehrfach-Verbinder (4) umfasst, wobei der wenigstens eine Mehrfach-Verbinder (4) umfasst:
einen standardisierten mechanischen Verbindungsabschnitt (7) zum mechanischen Anbringen einer externen Komponente,
einen an der erweiterbaren Förderanlage (1) befestigten Befestigungsabschnitt (16a, 16b) und
einen standardisierten, eine Stromversorgung und/oder einen Unterdruckanschluss für die externe Komponente bereitstellenden Funktions-Verbindungsabschnitt (6),
wobei der standardisierte mechanische Verbindungsabschnitt (7) angepasst ist, einer von der angebrachten wenigstens einen externen Komponente ausgeübten Gravitationskraft und/oder einer von der angebrachten wenigstens einen externen Komponente ausgeübten Drehkraft entgegenzuwirken, und
eine Vielzahl von externen Komponenten, von denen jede externe Komponente einen wenigstens eine Komponente (14, 26, 36) haltenden Komponentenhalter (13, 27, 38, 40) und
wenigstens einen zur Verbindung mit dem wenigstens einen Mehrfach-Verbinder (4) angepassten Komponentenverbinder (8, 28, 37) umfasst,
wobei der Komponentenhalter (13, 27, 38, 40) den wenigstens einen Komponentenverbinder (8, 28, 37) enthält, wobei der wenigstens eine Komponentenverbinder (8, 28, 37) einen standardisierten, mechanischen Verbindungsabschnitt (19) enthält, der angepasst ist, um mit dem standardisierten mechanischen Verbindungsabschnitt (7) des Mehrfach-Verbinders (4) verbunden zu werden, und
wobei der wenigstens eine Komponentenverbinder (8, 28, 37) einen standardisierten Funktions-Verbindungsabschnitt (18) enthält, der angepasst ist, um mit dem standardisierten Funktions-Verbindungsabschnitt (6) des Mehrfach-Verbinders (4) verbunden zu werden,
wobei die Komponente (14, 26, 36) eine Leuchte (14), ein Ventilator (26), ein Saughebelsystem (36), ein Heizgerät, ein Kühlgerät, elektrische Arbeitsgeräte, Lautsprecher ist und
wobei wenigstens eine der Vielzahl von externen Komponenten eine Komponente (14, 26, 36) aufweist, die sich von der(n) Komponente(n) der(n) anderen Komponente(n) unterscheidet.

2. Erweiterbare Förderanlage nach Anspruch 1, wobei der Befestigungsabschnitt (16a, 16b) zwei gegenüberliegende Ansätze (16a, 16b) umfasst, wobei die Ansätze (16a, 16b) zur Befestigung des Mehrfach-Verbinders (4) an der erweiterbaren Förderanlage (1) angepasst sind.

3. Erweiterbare Förderanlage nach einem der vorangehenden Ansprüche, wobei der standardisierte Funktions-Verbindungsabschnitt (6) einen standardisierten elektrischen Verbinder enthält.

4. Erweiterbare Förderanlage nach einem der vorangehenden Ansprüche, wobei der wenigstens eine Komponentenverbinder (8, 28, 37) wenigstens einen mit dem standardisierten mechanischen Verbindungsabschnitt (7) des Mehrfach-Verbinders (4) in Eingriff stehenden Vorsprung (32) aufweist, wodurch einer von der Komponentenverbindung (8, 28, 37) ausgeübten Drehkraft entgegengewirkt wird.

5. Erweiterbare Förderanlage nach einem der vorangehenden Ansprüche, wobei der wenigstens eine Komponentenverbinder (8, 28, 37) mechanisch an dem Mehrfach-Verbinder (4) mit einer Schraubverbindung befestigt ist.

6. Erweiterbare Förderanlage nach einem der vorangehenden Ansprüche, wobei die Komponente (14, 26, 36) eine Leuchte (14), ein Ventilator (26), ein Unterdruckhebesystem (36) ist.

7. Erweiterbare Förderanlage nach Anspruch 6, wobei die Leuchte (14) eine Lichtemittierende Diodenlampe (24) umfasst.

8. Erweitere Förderanlage nach Anspruch 6 oder 7, wobei die Leuchte (14) einen derart gestalteten Lichtreflektor (25) enthält, dass von der Leuchte (14) ausgehende Lichtstrahlen nach oben und/oder nach unten emittiert werden.

9. Erweiterbare Förderanlage nach Anspruch 6, wobei der Ventilator (26) ein Querstromventilator ist.

10. Erweiterbare Förderanlage nach Anspruch 6 oder 9, wobei der Ventilator (26) ein Heizgerät zum Heizen von Luft und/oder ein Kühlgerät zum Kühlen von Luft umfasst.

11. Erweiterbare Förderanlage nach einem der vorangehenden Ansprüche, wobei der äußerste mechanisch verlängerbare Abschnitt (15) wenigstens ein Seitenteil (3) umfasst, das zum Aufnehmen des Mehrfach-Verbinders (4) ausgelegt ist.

12. Erweiterbare Förderanlage nach einem der vorangehenden Ansprüche, wobei der wenigstens eine Mehrfach-Verbinder (4) an einem Haltestab des äußersten mechanisch verlängerbaren Abschnitts (15) befestigt ist.

13. Erweiterbare Förderanlage nach einem der vorangehenden Ansprüche, wobei der standardisierte Funktions-Verbindungsabschnitt (6) des wenigstens einen Mehrfach-Verbinders (4) mit einer elektrischen Versorgung und/oder einem Unterdruckanschluss der erweiterbaren Förderanlage (1) verbunden ist.

## Revendications

1. Convoyeur extensible destiné à convoyer des articles, comprenant
une unité de base (43),
au moins une section extensible de manière mécanique (15) supportée en porte-à-faux et pouvant être positionnée de manière sélective par rapport à l'unité de base (43), et
une surface de convoyage (2) pour convoyer des articles, s'étendant au moins partiellement sur un côté supérieur de la au moins une section extensible de manière mécanique (15), dans lequel une section (15) de la au moins une section extensible de manière mécanique est une section extensible de manière mécanique la plus à l'extérieur (15),
**caractérisé en ce que** le convoyeur extensible (1) comprend au moins un système de connecteur multiple comprenant au moins un connecteur multiple (4), dans lequel le au moins un connecteur multiple (4) comprend :
une section de connexion mécanique normalisée (7) pour fixer de manière mécanique un composant externe, une section de fixation (16a, 16b) fixée au convoyeur extensible (1), et
une section de connexion opérationnelle normalisée (6) fournissant au moins une alimentation parmi une alimentation électrique et une alimentation en vide au composant externe, dans lequel la section de connexion mécanique normalisée (7) est adaptée pour contrebalancer au moins une force parmi une force de gravité exercée par le au moins un composant externe fixé et une force de rotation exercée par le au moins un composant externe fixé ; et
une pluralité de composants externes, chacun des composants externes comprenant :
un support de composant (13, 27, 38, 40) soutenant au moins un composant (14, 26, 36), et
au moins un connecteur de composant (8, 28, 37) adapté pour être relié au au moins un connecteur multiple (4), dans lequel le support de composant (13, 27, 38, 40) comprend le au moins un connecteur de composant (8, 28, 37), dans lequel le au moins un connecteur de composant (8, 28, 37) comprend une section de connexion mécanique normalisée (19) adaptée pour être reliée à la section de connexion mécanique normalisée (7) du connecteur multiple (4) et dans lequel le au moins un connecteur de composant (8, 28, 37) comprend une section de connexion opérationnelle normalisée (18) adaptée pour être reliée à la section de connexion opérationnelle normalisée (6) du connecteur multiple (4), dans lequel ledit composant (14, 26, 36) est un élément parmi : une lampe (14), un ventilateur (26), une ventouse de levage (36), un dispositif de chauffage, de refroidissement, des outils électriques, un haut-parleur, et dans lequel au moins un composant de la pluralité des composants externes est muni d'un composant (14, 26, 36) différent du ou des composants des autres composants externes.

2. Convoyeur extensible selon la revendication 1, dans lequel la section de fixation (16a, 16b) comprend deux tenons (16a, 16b) opposés l'un à l'autre, dans lequel les tenons (16a, 16b) sont adaptés pour fixer le connecteur multiple (4) au convoyeur extensible (1).

3. Convoyeur extensible selon l'une quelconque des revendications précédentes, dans lequel la section de connexion opérationnelle normalisée (6) comprend un connecteur électrique normalisé.

4. Convoyeur extensible selon l'une quelconque des revendications précédentes, dans lequel le au moins un connecteur de composant (8, 28, 37) comprend au moins une saillie (32) entrant en prise avec l'intérieur de la section de connexion mécanique normalisée (7) du connecteur multiple (4), contrebalançant de ce fait une force de rotation exercée par la connexion du composant (8, 28, 37).

5. Convoyeur extensible selon l'une quelconque des revendications précédentes, dans lequel le au moins un connecteur de composant (8, 28, 37) est fixé de manière mécanique au connecteur multiple (4) par un raccord à vis.

6. Convoyeur extensible selon l'une quelconque des revendications précédentes, dans lequel ledit composant (14, 26, 36) est un élément parmi : une lampe (14), un ventilateur (26), un système de ventouse de levage (36).

7. Convoyeur extensible selon la revendication 6, dans lequel la lampe (14) comprend une diode électroluminescente (24).

8. Convoyeur extensible selon l'une quelconque des revendications 6 et 7, dans lequel la lampe (14) comprend un réflecteur de lumière (25) configuré de telle manière que des rayons lumineux provenant de la lampe (14) soient diffusés vers le haut et/ou vers le bas.

9. Convoyeur extensible selon la revendication 6, dans lequel le ventilateur (26) est un ventilateur tangentiel.

10. Convoyeur extensible selon la revendication 6 ou 9, dans lequel le ventilateur (26) comprend au moins un élément parmi un dispositif de chauffage et de refroidissement pour chauffer et refroidir l'air.

11. Convoyeur extensible selon l'une quelconque des revendications précédentes, dans lequel la section extensible de manière mécanique la plus à l'extérieur (15) comprend au moins une partie latérale (3) configurée pour recevoir le connecteur multiple (4).

12. Convoyeur extensible selon l'une quelconque des revendications précédentes, dans lequel le au moins un connecteur multiple (4) est fixé à une barre de support de la section extensible de manière mécanique la plus à l'extérieur (15).

13. Convoyeur extensible selon l'une quelconque des revendications précédentes, dans lequel la section de connexion opérationnelle normalisée (6) du au moins un connecteur multiple (4) est reliée à une alimentation électrique et/ou à une alimentation en vide du convoyeur extensible (1).
